# EUROPEAN PATENT SPECIFICATION

(11) **EP 2 454 830 B1**
(45) Date of publication and mention of the grant of the patent: **29.05.2013**
(21) Application number: 10752180.9
(22) Date of filing: 12.07.2010
(51) Int. Cl.: H04B 13/00

(54) **A DEVICE AND METHOD FOR TRANSMITTING A SIGNAL THROUGH A BODY MADE OF DIELECTRIC MATERIAL**
VORRICHTUNG UND VERFAHREN ZUR ÜBERTRAGUNG EINES SIGNALS DURCH EINEN KÖRPER AUS EINEM DIELEKTRISCHEN MATERIAL
DISPOSITIF ET PROCÉDÉ DE TRANSMISSION D'UN SIGNAL À TRAVERS UN CORPS FAIT DE MATÉRIAU DIÉLECTRIQUE

(30) Priority: 17.07.2009 IT BO20090460
(43) Date of publication of application: 23.05.2012
(73) Proprietor: Fabiani, Davide, 40128 Bologna (IT); Montanari, Gian Carlo, 40037 Sasso Marconi (Bologna) (IT)
(72) Inventor: Fabiani, Davide, 40128 Bologna (IT); Montanari, Gian Carlo, 40037 Sasso Marconi (Bologna) (IT); Dissado, Leonard Alexander, Wigston Leicester, LE18 1 DQ (GB)
(74) Representative: Conti, Marco
(86) International application number: PCT/IB2010/053177
(87) International publication number: WO 2011/007311

(56) References cited:
- US-A- 2 129 711
- US-A1- 2006 153 109
- DAVID CAI ET AL.: "A perturbed Toda lattice model for low loss nonlinear transmission lines" PHYSICA D, vol. 123, 15 November 1998 (1998-11-15), pages 291-300, XP002568292

## Description

### Technical Field

This invention relates to a device and a method for transmitting a signal through a body made of dielectric material.

More specifically, the signals referred to are low-frequency signals transmitted without the aid of a high-frequency carrier wave able to pass through the transmission means and modulated according to the signal to be transmitted.

### Background Art

In the field of signal transmission systems, prior art teaches the use of devices, such as optical fibres, which allow a signal to be transmitted from an emitting element to a receiving element without establishing an electrical connection between them, that is to say, without connecting emitter and receiver using an electrical conductor.

This is especially useful when it is necessary to keep the emitter galvanically isolated from the receiver.

In the field of optical communications networks, the use of light solitons has also been experimented.

In mathematics and physics a soliton is a self-reinforcing solitary wave created by nonlinear effects in a medium.

More specifically, in the above mentioned technical applications for the transmission of signals, a soliton consists of a light beam which, under specific conditions of the medium, propagates through a photo-refractive crystal. The modulation of the refractive index allows the signal to be transmitted. In effect, a refractive index profile typical of a waveguide such as an optical fibre is obtained inside the crystal.

One advantage of optical soliton transmission is that the soliton wave can travel any distance without any dissipation. The conservation of the wave means that there is no loss of either energy or information. This has evident technical implications for both energy transmission (no Joule effect causing efficiency loss in the network) and information technology.

Optical transmission systems using light solitons, however, have the disadvantage of being excessively influenced by temperature. As a result, these transmission systems have proved to be relatively imprecise and unreliable.

More in general, optical fibres have the limitation of not constituting, in themselves, an effective insulation system (especially for medium and high voltages).

Thus, if a signal has to be transmitted between an emitter and a receiver which must be electrically isolated from each other, it is always necessary to provide a specific insulation system, in parallel with the optic fibre whose function is solely that of transmitting the signal.

Further, optical fibre transmission systems require complicated electronic components for generating the light signals and converting these into electrical signals.

Furthermore, document DAVID CAI ET AL.: "A perturbed Toda lattice for low loss nonlinear transmission lines" PHYSICA D, vol. 123, 15 November 1998 (1998-11-15), pages 291-300, describes a model for a transmission line for high-frequency electronic applications.

More specifically, the document describes how application to the transmission means of a Gaussian type pulse train (inputs), that is to say, signals that are variable in time according to a defined exponential law, generates soliton trains through the transmission line.

The equipment required to generate signals of this type, however, is expensive and complicated.

The document also proposes a model for converting a disordered sequence of high-frequency pulses into an ordered sequence of solitons. The document, does not, however, deal with the problem of transmitting a signal through a dielectric material used as insulation for an electrical apparatus.

### Aim of the Invention

This invention has for an aim to provide a device that overcomes the above mentioned disadvantages of the prior art.

More specifically, one aim of this invention is to provide a device capable of transmitting a signal through a dielectric material constituting insulation for an electrical apparatus (for example a medium- or high-voltage apparatus) in a particularly robust and reliable manner.

A further aim of this invention is to propose a device for transmitting a signal through a dielectric material that is free of energy and information losses.

A yet further aim of the invention is to provide a device for transmitting a signal through a dielectric material used as insulation for an electrical apparatus (for example a medium- or high-voltage apparatus) without energy and information losses in a particularly robust and reliable manner.

These aims are fully achieved by the device according to the invention, as specified in the appended claims; more specifically, the device of the invention comprises, combined together:
- a first and a second electrode applied to opposite ends of the dielectric body and arranged along a longitudinal direction of transmission;
- a direct-current voltage generator connected to the electrodes for generating a direct-current electric field in the dielectric body in the longitudinal direction of transmission;
- control means connected to the generator for producing at the interface between the electrodes and the dielectric body a predetermined charge, thus generating solitary charge waves propagating from one electrode to the other at preset time intervals, the control means being configured to regulate the repetition frequency and/or the amplitude of the charge waves according to the signal to be transmitted.

The method according to the invention is characterized in that it comprises the following steps:
- preparing a first and a second electrode applied to opposite ends of the dielectric body and arranged along a longitudinal direction of transmission;
- applying a direct-current voltage to the electrodes for generating a direct-current electric field in the dielectric body in the longitudinal direction of transmission;
- controlling the generator in such a way as to produce at the interface between the electrodes and the dielectric body a predetermined charge, for generating solitary charge waves propagating from one electrode to the other at preset time intervals;
- regulating the repetition frequency and/or the amplitude of the charge waves according to the signal to be transmitted.

It should be noted that this invention regards a device and a method for transmitting low-frequency signals, that is to say signals transmitted without the aid of a high-frequency carrier wave able to pass through the transmission means and modulated according to the signal to be transmitted. This invention thus addresses a signal transmission system alternative to the one based on electromagnetic waves.

The device according to the invention can thus be used to transmit a signal through a dielectric body forming an electrical insulator by generating charge solitons through the dielectric body itself.

In effect, the Applicant has conducted numerous experiments and extensive research demonstrating the possibility of generating charge solitons within a dielectric under certain conditions.

Surprisingly, electrical solitons (that is, the electrical charge waves) show a limited (and in any case easily controlled) dependence on the temperature of the dielectric body.

That makes the device according to the invention much more reliable and robust than optical networks which use light solitons.

Further, the invention also allows the signal to be transmitted by modulating the repetition rate of the charge solitons by acting on the electric field applied to the dielectric body or, in addition or alternatively, by acting on the temperature of the dielectric body.

In addition or alternatively to modulating the repetition frequency of the charge solitons, the invention allows the signal to be transmitted by modulating the amplitude of the charge solitons by controlling a mechanical compressive force applied to the device (in particular at the interface between the electrode and the dielectric body).

In addition, in the course of its research and experiments, the Applicant also investigated the conditions necessary for generating the charge solitons through the dielectric body.

In light of this, the invention contemplates several alternatives.

In a first preferred embodiment, the dielectric body is made of a thermoplastic dielectric material (for example, PE).

In a second embodiment, the dielectric body is made of a thermosetting dielectric material (for example, epoxy resin) with nano-additives designed to confer specific mechanical properties on the material.

In a third embodiment, the dielectric body is made of a thermosetting dielectric material (for example, epoxy resin) without any additives. In this case, the body is subjected to a mechanical compressive force at least at one of the two interfaces (between the electrodes and the body).

The electrodes are arranged along, and perpendicularly to, the longitudinal direction of transmission. Thus, the signal constituted by a sequence of electrical charge solitons propagates in that longitudinal direction, which is the direction of the electric field applied to the dielectric body.

The device according to the invention also comprises control means operating (by a physical action) on the dielectric body in order to generate a modulation of the repetition frequency of the charge waves according to the signal to be transmitted.

The physical action may, for example, be of a thermal or mechanical type.

In light of this, in the method according to the invention, the controlling step entails applying a physical action on the dielectric body in order to generate a modulation of the repetition frequency of the charge waves according to the signal to be transmitted.

For example, the physical action on the dielectric body comprises a variation in the temperature of the dielectric body. Alternatively, or in addition, the physical action on the dielectric body comprises applying a mechanical force (for example, a compressive or tractive force) on the dielectric body.

### Brief Description of the Drawings

These and other features of the invention will become more apparent from the following description of a preferred, non-limiting embodiment of it, with reference to the single accompanying drawing which illustrates a device according to the invention.

### Detailed Description of the Preferred Embodiments of the Invention

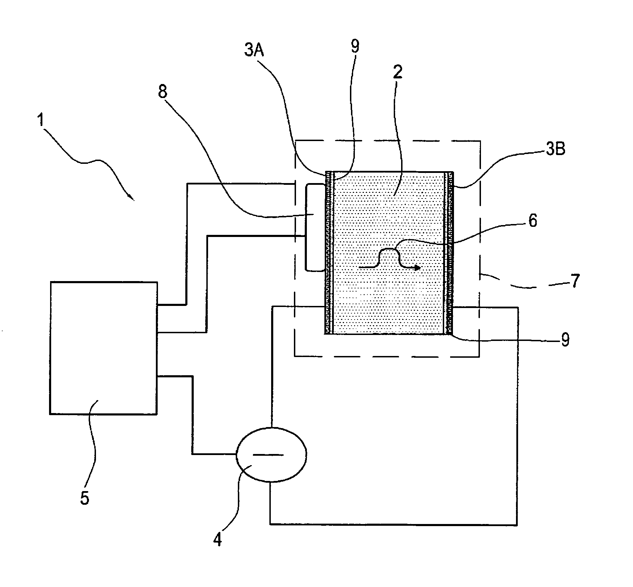

The numeral 1 in the drawing denotes a device according to this invention.

The device 1 is a device for transmitting a signal through a body 2 made of dielectric material. The dielectric body 2 constitutes the insulation of an electrical apparatus (for example, a medium voltage cable or a film of insulating material or a capacitor).

The device 1 comprises a first electrode 3A and a second electrode 3B connected to opposite ends of the body 2 along a longitudinal direction of transmission.

The device 1 also comprises a direct-current voltage generator 4 connected to the electrodes 3 (or rather, 3A and 3B) for generating a direct-current electric field in the body 2 in the longitudinal direction of transmission.

It should be noticed that the terms "direct-current voltage" and "direct-current electric field" are used to mean a voltage and a field which maintain the same sign over time, that is to say, which do not periodically invert their polarity (as instead is the case of an alternating-current voltage and an alternating-current electrical field).

It should also be noted that the electrodes 3 preferably consist of plates made of a conductive material. Preferably, the electrodes 3 are arranged in planes perpendicular to the longitudinal direction.

The device 1 further comprises control means 5 connected to the generator 4 for producing at the interface between the electrodes 3 and the dielectric body 2 a predetermined charge, thus generating solitary charge waves 6 (that is, charge solitons 6) propagating from one electrode 3 to the other at preset time intervals.

The control means 5 are configured to regulate the repetition frequency and/or the amplitude of the charge waves 6 according to the signal to be transmitted.

The solitary charge waves 6 are electric solitons. In effect, each soliton propagates through the dielectric body 2 without changing its waveform and at a constant speed (that is to say, it does not undergo attenuations or dispersions).

The electric field applied to the dielectric body 2 is preferably of approximately 30-50 MV/m.

The mobility of the solitons is approximately 10⁻¹⁰-10⁻⁹ m²/V s.

The control means 5 comprise, for example, a voltage variator connected to an electronic card or to a PLC.

According to the invention, the device 1 is also equipped with a detector of the charge present at the interfaces (for example, based on the known, electro acoustic pulse, or PEA, method).

The control means 5, however, might be calibrated in such a way that the predetermined charge values are reached in predetermined times, driving the generator 4 to supply predetermined voltage values when the geometry and electrical properties of the dielectric body 2 are known. In that case, it is not necessary to measure the charge.

More specifically, the control means 5 are programmed to drive the generator 4 in such a way that the charge which is established at the interfaces is higher than the value of the charge accumulation threshold (the value being linked to the nature of the material the dielectric body 2 is made of).

Preferably, the control means 5 are configured to change the amplitude of the voltage supplied by the generator 4 in such a way as to generate a modulation of the repetition frequency of the charge waves 6 according to the signal to be transmitted.

In effect, in the course of the experiments conducted by it, the Applicant found that the charge waves 6 (that is, the charge solitons) are repeated at a frequency that increases with the increase of the electric field applied to the dielectric body 2.

Preferably, the device 1 comprises (that is to say, the control means 5 comprise) a thermostat 7 acting on the dielectric body 2 for adjusting its temperature so as to generate a modulation of the repetition frequency of the charge waves 6 according to the signal to be transmitted.

In effect, in the course of the experiments conducted by it, the Applicant found that the charge waves 6 (that is, the charge solitons) are repeated at a frequency which increases with the increase of the temperature of the dielectric body 2 (and of the electrodes 3).

According to the invention, the step of controlling the temperature of the dielectric body 2 is performed in combination or alternatively to the step of controlling the electric field applied to the dielectric body 2.

Preferably, the device 1 also comprises (that is to say, the control means 5 also comprise) a mechanical actuator 8 (for example a pneumatically driven clamp) acting on the dielectric body 2 in such a way as to apply a force (substantially compression applied by at least one of the electrodes 3 towards the inside of the dielectric body 2) in such a way as to generate a modulation of the amplitude of the charge waves 6 according to the signal to be transmitted.

In effect, in the course of the experiments conducted by it, the Applicant found that the amplitude of the charge waves 6 (that is, of the charge solitons) increases with the increase of the mechanical compression applied to the dielectric body 2.

The control means 5 are thus programmed to regulate the voltage supplied by the generator 4 in such a way that:
- the predetermined charge present at the interfaces between the electrodes 3 and the dielectric body 2 is greater than the value of the charge accumulation threshold (for the dielectric body 2);
- the electric field applied to the dielectric body 2 is lower than the dielectric strength value of the dielectric body 2.

Preferably, at least one of the two electrodes 3 comprises (and more preferably, both of the electrodes 3 comprise) a semiconductor layer 9 interposed between the electrode 3 and the dielectric body 2. The semiconductor layer 9 promotes the formation of the charge at the interface between the electrode 3 and the dielectric body 2.

The dielectric body 2 itself is preferably made of a thermoplastic material (for example, PE).

In another embodiment of it, the dielectric body 2 is made of a thermosetting material (for example, epoxy resin) with nano-additives.

The nano-additives are designed to confer specific mechanical properties on the material the dielectric body 2 is made of. The nano-additives may, for example, be lamellar silicates (clays), silica and metal oxides. These nano-additives are able to modify the mechanical properties of the material (for example, increasing the modulus of elasticity), enabling the soliton to propagate inside the insulation.

According to the invention, the device 1 comprises means for applying mechanical compression at least at one of the interfaces between the electrodes 3 and the dielectric body 2. These means may, for example, comprise the mechanical actuator 8 or other means such as, for example, a containment shell of suitable size for applying pressure on the dielectric body 2.

In such case (that is to say, in the presence of means for applying mechanical compression) the dielectric body 2 is made of a thermosetting material (for example, epoxy resin) without necessitating nano-additives.

This invention also provides a method for transmitting a signal through a body 2 made of dielectric material constituting insulation for an electric apparatus.

The method comprises the following steps:
- preparing a first electrode 3A and a second electrode 3B applied to opposite ends of the dielectric body 2 and arranged along a longitudinal direction of transmission;
- applying a direct-current voltage to the electrodes 3, for generating a direct-current electric field in the dielectric body 2 in the longitudinal direction of transmission;
- controlling the electric field generated, in such a way as to produce at the interface between the electrodes 3 and the dielectric body 2 a predetermined charge, for generating solitary charge waves 6 propagating from one electrode to the other at preset time intervals;
- regulating the repetition frequency and/or the amplitude of the charge waves 6 according to the signal to be transmitted.

Preferably, the regulating step comprises controlling the amplitude of the electric field applied to the dielectric body 2 in order to regulate the repetition rate of the solitons 6.

Preferably, the regulating step comprises controlling the temperature of the dielectric body 2 (in addition or alternatively to controlling the amplitude of the electric field) in order to regulate the repetition rate of the solitons 6.

Preferably, the regulating step comprises controlling a mechanical compressive force applied to the dielectric body 2 (that is, to at least one of the electrodes 3) in order to regulate the amplitude of the solitons 6 (in addition or alternatively to controlling the amplitude of the electric field or the temperature of the dielectric body 2).

It should be noted that the step of controlling the electric field applied to the dielectric body 2 is performed in such a way that the following two conditions occur simultaneously:
- the predetermined charge present at the interfaces between the electrodes 3 and the dielectric body 2 is greater than the value of the charge accumulation threshold for the dielectric body;
- the electric field is lower than the dielectric strength value of the dielectric body.

The device and method according to the invention offer the following advantages.

The invention allows the signals to be transmitted in the form of electric solitons through a dielectric.

The invention may therefore be used in the context of existing insulation equipment.

Moreover, this signal transmission system has the advantage of being totally free of dissipation.

The signal transmission system also has the advantage of being little influenced by temperature (or in any case of not being influenced by it in unwanted manner), making the system particularly reliable and robust.

## Claims

1. A device (1) for transmitting a signal through a body (2) made of dielectric material constituting insulation for an electric apparatus,
**characterized in that** it comprises, in combination:
- a dielectric body (2);
- a first and a second electrode (3A, 3B) connected to opposite ends of the dielectric body (2) along a longitudinal direction of transmission;
- a direct-current voltage generator (4), connected to the electrodes (3) for generating a direct-current electric field in the dielectric body (2) in the longitudinal direction of transmission;
- control means (5) connected to the generator (4) for producing at the interface between the electrodes (3) and the dielectric body (2) a predetermined charge, thus generating solitary charge waves (6) propagating from one electrode to the other at preset time intervals, the control means being configured to regulate the repetition frequency and/or the amplitude of the charge waves (6) according to the signal to be transmitted, wherein the control means (5) are configured to apply a physical action on the dielectric body (2) in order to generate a modulation of the repetition frequency of the charge waves (6) according to the signal to be transmitted.

2. The device according to claim 1, wherein the control means (5) are configured to change the amplitude of the voltage supplied by the generator (4) in such a way as to generate a modulation of the repetition frequency of the charge waves (6) according to the signal to be transmitted.

3. The device according to any of the foregoing claims, wherein the control means (5) comprise a thermostat (7) acting on the dielectric body (2) for changing its temperature so as to generate a modulation of the repetition frequency of the charge waves (6) according to the signal to be transmitted.

4. The device according to any of the foregoing claims, wherein the control means (5) comprise a mechanical actuator (8) acting on the dielectric body (2) for applying a mechanical stress to it so as to generate a modulation of the amplitude of the charge waves (6) according to the signal to be transmitted.

5. The device according to any of the foregoing claims, wherein the control means (5) are programmed to regulate the voltage supplied by the generator (4) so that, in combination:
- the predetermined charge present at the interfaces between the electrodes (3) and the dielectric body (2) is greater than the value of the charge accumulation threshold for the dielectric body (2);
- the electric field is lower than the dielectric strength value of the dielectric body (2).

6. The device according to any of the foregoing claims, comprising a semiconductor layer (9) interposed between at least one of the electrodes (3) and the dielectric body (2).

7. The device according to any of the foregoing claims, wherein the dielectric body (2) is made of a thermoplastic material.

8. The device according to any of the claims from 1 to 6, wherein the dielectric body (2) is made of a thermosetting material with nano-additives.

9. The device according to any of the foregoing claims, comprising means for applying mechanical compression at least at one of the interfaces between the electrodes (3) and the dielectric body (2).

10. The device according to any of the foregoing claims, wherein the electrodes (3) are positioned perpendicularly to the longitudinal direction of transmission.

11. A method for transmitting a signal through a body (2) made of dielectric material constituting insulation for an electric apparatus,
**characterized in that** it comprises the following steps:
- preparing a first and a second electrode (3A, 3B) applied to opposite ends of the dielectric body (2) and arranged along a longitudinal direction of transmission;
- applying a direct-current voltage to the electrodes (3), for generating a direct-current electric field in the dielectric body (2) in the longitudinal direction of transmission;
- controlling the electric field generated, in such a way as to produce at the interface between the electrodes (3) and the dielectric body (2) a predetermined charge, for generating solitary charge waves (6) propagating from one electrode to the other at preset time intervals;
- regulating the repetition frequency and/or the amplitude of the charge waves (6) according to the signal to be transmitted, wherein the controlling step entails applying a physical action on the dielectric body (2) in order to generate a modulation of the repetition frequency of the charge waves (6) according to the signal to be transmitted.

12. The method according to claim 11, wherein the physical action on the dielectric body (2) comprises a variation in the temperature of the dielectric body (2).

13. The method according to claim 11 or 12, wherein the physical action on the dielectric body (2) comprises applying a mechanical force to the dielectric body.

## Patentansprüche

1. Vorrichtung (1) zur Übertragung eines Signals durch einen Körper (2) aus einem dielektrischen Material, das eine Isolierung für einen elektrischen Apparat bildet, **dadurch gekennzeichnet, dass** sie, in Kombination, Folgendes umfasst:
- einen dielektrischen Körper (2);
- eine erste und eine zweite Elektrode (3A, 3B), die mit gegenüberliegenden Enden des dielektrischen Körpers (2) entlang einer longitudinalen Übertragungsrichtung verbunden sind;
- einen Gleichstrom-Spannungsgenerator (4), der mit den Elektroden (3) zur Erzeugung eines elektrischen Gleichstromfelds im dielektrischen Körper (2) in der longitudinalen Übertragungsrichtung verbunden ist;
- Steuermittel (5), die mit dem Generator (4) zum Produzieren einer festgelegten Ladung an der Schnittstelle zwischen den Elektroden (3) und dem dielektrischen Körper (2) verbunden sind, wodurch solitäre Ladungswellen (6) erzeugt werden, die sich bei festgelegten Zeitintervallen von einer Elektrode zur anderen ausbreiten, wobei die Steuermittel zur Regulierung der Wiederholungsfrequenz und/oder der Amplitude der Ladungswellen (6) gemäß dem zu übertragenden Signal konfiguriert sind, wobei die Steuermittel (5) zum Anwenden einer physikalischen Wirkung auf den dielektrischen Körper (2) konfiguriert sind, um eine Modulation der Wiederholungsfrequenz der Ladungswellen (6) gemäß dem zu übertragenden Signal zu erzeugen.

2. Vorrichtung nach Anspruch 1, wobei die Steuermittel (5) zur Änderung der Amplitude der Spannung, die vom Generator (4) geliefert wird, konfiguriert sind, sodass sie eine Modulation der Wiederholungsfrequenz der Ladungswellen (6) gemäß dem zu übertragenden Signal zu erzeugen.

3. Vorrichtung nach einem der vorangehenden Ansprüche, wobei die Steuermittel (5) ein Thermostat (7) umfassen, das auf den dielektrischen Körper (2) einwirkt, um seine Temperatur zu ändern, sodass eine Modulation der Wiederholungsfrequenz der Ladungswellen (6) gemäß dem zu übertragenden Signal erzeugt wird.

4. Vorrichtung nach einem der vorangehenden Ansprüche, wobei die Steuermittel (5) einen mechanischen Aktor (8) umfassen, der auf den dielektrischen Körper (2) einwirkt, um auf ihn eine mechanische Beanspruchung aufzuerlegen, sodass eine Modulation der Amplitude der Ladungswellen (6) gemäß dem zu übertragenden Signal erzeugt wird.

5. Vorrichtung nach einem der vorangehenden Ansprüche, wobei die Steuermittel (5) dazu programmiert sind, die vom Generator (4) gelieferte Spannung zu regulieren, sodass, in Kombination:
- die festgelegte Ladung, die an den Schnittstellen zwischen den Elektroden (3) und dem dielektrischen Körper (2) vorhanden ist, größer als der Schwellenwert der Ladungsspeicherung für den dielektrischen Körper (2) ist;
- das elektrische Feld geringer als der Wert der dielektrischen Festigkeit des dielektrischen Körpers (2) ist.

6. Vorrichtung nach einem der vorangehenden Ansprüche, umfassend eine Halbleiterschicht (9), die zwischen mindestens einer der Elektroden (3) und dem dielektrischen Körper (2) liegt.

7. Vorrichtung nach einem der vorangehenden Ansprüche, wobei der dielektrische Körper (2) aus einem thermoplastischen Material ist.

8. Vorrichtung nach einem der Ansprüche 1 bis 6, wobei der dielektrische Körper (2) aus einem Duroplast-Material mit Nanoadditiven ist.

9. Vorrichtung nach einem der vorangehenden Ansprüche, umfassend Mittel zum Anlegen mechanischer Kompression auf mindestens eine der Schnittstellen zwischen den Elektroden (3) und dem dielektrischen Körper (2).

10. Vorrichtung nach einem der vorangehenden Ansprüche, wobei die Elektroden (3) lotrecht zur longitudinalen Übertragungsrichtung positioniert sind.

11. Verfahren zur Übertragung eines Signals durch einen Körper (2) aus einem dielektrischen Material, das eine Isolierung für einen elektrischen Apparat bildet, **dadurch gekennzeichnet, dass** es die folgenden Schritte umfasst:
- Vorbereiten einer ersten und einer zweiten Elektrode (3A, 3B), die an gegenüberliegenden Enden des dielektrischen Körpers (2) angebracht und entlang einer longitudinalen Übertragungsrichtung angeordnet sind;
- Anlegen einer Gleichstromspannung an den Elektroden (3) zur Erzeugung eines elektrischen Gleichstromfelds im dielektrischen Körper (2) in der longitudinalen Übertragungsrichtung;
- Steuern des erzeugten elektrischen Felds, sodass an der Schnittstelle zwischen den Elektroden (3) und dem dielektrischen Körper (2) eine festgelegte Ladung produziert wird, um solitäre Ladungswellen (6) zu erzeugen, die sich bei festgelegten Zeitintervallen von einer Elektrode zur anderen ausbreiten;
- Regulieren der Wiederholungsfrequenz und/oder der Amplitude der Ladungswellen (6) gemäß dem zu übertragenden Signal, wobei der Schritt des Steuerns das Anwenden einer physikalischen Wirkung auf den dielektrischen Körper (2) verursacht, um eine Modulation der Wiederholungsfrequenz der Ladungswellen (6) gemäß dem zu übertragenden Signal zu erzeugen.

12. Verfahren nach Anspruch 11, wobei die physikalische Wirkung auf den dielektrischen Körper (2) eine Variation der Temperatur des dielektrischen Körpers (2) umfasst.

13. Verfahren nach Anspruch 11 oder 12, wobei die physikalische Wirkung auf den dielektrischen Körper (2) das Anlegen einer mechanischen Kraft auf den dielektrischen Körper umfasst.

## Revendications

1. Dispositif (1) de transmission d'un signal à travers un corps (2) en matériau diélectrique constituant une isolation pour un appareil électrique,
**caractérisé en ce qu'**il comprend, en combinaison :
- un corps diélectrique (2) ;
- une première et une seconde électrode (3A, 3B) reliées aux extrémités opposées du corps diélectrique (2) le long d'une direction longitudinale de transmission ;
- un générateur de tension en courant continu (4), relié aux électrodes (3) pour générer un champ électrique en courant continu dans le corps diélectrique (2) dans la direction longitudinale de transmission ;
- des moyens de commande (5) reliés au générateur (4) pour produire au niveau de l'interface entre les électrodes (3) et le corps diélectrique (2) une charge prédéterminée, générant ainsi des ondes solitaires de charge (6) se propageant d'une électrode à l'autre à des intervalles de temps préétablis, les moyens de commande étant configurés pour régler la fréquence de répétition et/ou l'amplitude des ondes de charge (6) selon le signal à transmettre, dans lequel les moyens de commande (5) sont configurés pour appliquer une action physique sur le corps diélectrique (2) afin de générer une modulation de la fréquence de répétition des ondes de charge (6) selon le signal à transmettre.

2. Dispositif selon la revendication 1, dans lequel les moyens de commande (5) sont configurés pour modifier l'amplitude de la tension fournie par le générateur (4) de sorte à générer une modulation de la fréquence de répétition des ondes de charge (6) selon le signal à transmettre.

3. Dispositif selon l'une quelconque des revendications précédentes, dans lequel les moyens de commande (5) comprennent un thermostat (7) agissant sur le corps diélectrique (2) pour modifier sa température de sorte à générer une modulation de la fréquence de répétition des ondes de charge (6) selon le signal à transmettre.

4. Dispositif selon l'une quelconque des revendications précédentes, dans lequel les moyens de commande (5) comprennent un actionneur mécanique (8) agissant sur le corps diélectrique (2) pour lui appliquer un effort mécanique de sorte à générer une modulation de l'amplitude des ondes de charge (6) selon le signal à transmettre.

5. Dispositif selon l'une quelconque des revendications précédentes, dans lequel les moyens de commande (5) sont programmés pour régler la tension fournie par le générateur (4) de sorte qu'en combinaison :
- la charge prédéterminée présente aux interfaces entre les électrodes (3) et le corps diélectrique (2) est supérieure à la valeur du seuil d'accumulation de charge du corps diélectrique (2) ;
- le champ électrique est inférieur au taux de résistance du corps diélectrique (2).

6. Dispositif selon l'une quelconque des revendications précédentes, comprenant une couche semi-conductrice (9) interposée entre au moins une des électrodes (3) et le corps diélectrique (2).

7. Dispositif selon l'une quelconque des revendications précédentes, dans lequel le corps diélectrique (2) est fabriqué dans une matière thermoplastique.

8. Dispositif selon l'une quelconque des revendications de 1 à 6, dans lequel le corps diélectrique (2) est fabriqué dans une matière thermodurcissable avec des nano-additifs.

9. Dispositif selon l'une quelconque des revendications précédentes, comprenant des moyens pour appliquer une compression mécanique au moins à l'une des interfaces entre les électrodes (3) et le corps diélectrique (2).

10. Dispositif selon l'une quelconque des revendications précédentes, dans lequel les électrodes (3) sont positionnées perpendiculairement à la direction longitudinale de transmission.

11. Procédé de transmission d'un signal à travers un corps (2) en matériau diélectrique constituant une isolation pour un appareil électrique,
**caractérisé en ce qu'**il comprend les étapes suivantes :
- préparer une première et une seconde électrode (3A, 3B) appliquées aux extrémités opposées du corps diélectrique (2) et disposées le long d'une direction longitudinale de transmission ;
- appliquer une tension en courant continu aux électrodes (3), pour générer un champ électrique en courant continu dans le corps diélectrique (2) dans la direction longitudinale de transmission ;
- contrôler le champ électrique généré de telle sorte à produire au niveau de l'interface entre les électrodes (3) et le corps diélectrique (2) une charge prédéterminée pour générer des ondes solitaires de charge (6) se propageant d'une électrode à l'autre à des intervalles de temps préétablis ;
- régler la fréquence de répétition et/ou l'amplitude des ondes de charge (6) selon le signal à transmettre, dans laquelle l'étape de contrôle provoque l'application d'une action physique sur le corps diélectrique (2) afin de générer une modulation de la fréquence de répétition des ondes de charge (6) selon le signal à transmettre.

12. Procédé selon la revendication 11, dans lequel l'action physique sur le corps diélectrique (2) comprend une variation de la température du corps diélectrique (2)

13. Procédé selon les revendications 11 ou 12, dans lequel l'action physique sur le corps diélectrique (2) comprend l'application d'une force mécanique au corps diélectrique.
